# EUROPÄISCHE PATENTANMELDUNG

(11) **EP 3 621 169 A1**
(43) Veröffentlichungstag der Anmeldung: **11.03.2020**
(21) Anmeldenummer: 18192475.4
(22) Anmeldetag: 04.09.2018
(51) Int. Cl.: H02J 3/04, H02J 3/38

(54) **INSELNETZ UND VERFAHREN ZUM BETRIEB EINES INSELNETZES**

(71) Anmelder: Siemens Aktiengesellschaft, 80333 München (DE)
(72) Erfinder: AMTHOR, Arvid, 98631 Grabfeld OT Nordheim (DE); HÖRMANN, Walter, 2201 Gerasdorf bei Wien (AT); REISCHBÖCK, Markus, 91056 Erlangen (DE)

(57) **Zusammenfassung**

Es wird ein Inselnetz, umfassend wenigstens eine oder mehrere Stromerzeugungseinheiten (10) zum Erzeugen einer elektrischen Leistung, eine Regeleinheit (12) zum Regeln jeder der mittels der Stromerzeugungseinheiten (10) erzeugten elektrischen Leistungen, sowie einen Netzanschlusspunkt an ein bezüglich des Inselnetzes übergeordnetes Stromnetz vorgeschlagen, wobei das Inselnetz in einem vom Stromnetz entkoppelten ersten Betriebszustand und in einem an das Stromnetz mittels des Netzanschlusspunktes gekoppelten zweiten Betriebszustand betreibbar ist. Erfindungsgemäß ist die Regeleinheit (12) dazu ausgebildet ist, die zur Regelung vorgesehene Regelgröße (42) in Abhängigkeit der zwei Betriebszustände festzulegen. Weiterhin betrifft die Erfindung ein Verfahren zum Betrieb eines Inselnetzes.

## Beschreibung

Die Erfindung betrifft ein Inselnetz gemäß dem Oberbegriff des Patentanspruches 1. Weiterhin betrifft die Erfindung ein Verfahren zum Betrieb eines Inselnetzes gemäß dem Oberbegriff des Patentanspruches 6.

Inselnetze sind in Bezug auf elektrischem Strom Versorgungsbereiche, die von einem bezüglich des Inselnetzes übergeordneten Stromnetz, beispielsweise einem Verbundnetz, unabhängig betrieben werden können.

Insbesondere in geographisch abgelegenen Gebieten werden Inselnetze verwendet. Hierbei kann das Ankoppeln des Inselnetzes über einen Netzanschlusspunkt an ein übergeordnetes Stromnetz technisch und/oder wirtschaftlich nicht sinnvoll sein. Weiterhin sind Schiffe, Bohrinseln und dergleichen ebenfalls Inselnetze. Diese können als permanente Inselnetze bezeichnet werden und sind, beispielsweise aufgrund von Dieselgeneratoren, in der Lage die gesamte elektrische Last innerhalb des Inselnetzes abzudecken.

Weiterhin werden Inselnetze in Gebieten mit einem übergeordneten Stromnetz oder Verbundnetz zur kurzfristigen Bereitstellung einer elektrischen Leistung (Notstrom), insbesondere in sicherheitsrelevanten Umgebungen, verwendet. Hierbei stelle diese für einen bestimmten, typischerweise kurzfristigen Zeitraum, die Versorgung sicher oder unterstützen eine Einleitung eines Notfallprogramms, typischerweise ebenfalls mittels Dieselgeneratoren. Allerdings sind diese Inselnetze nicht permanent, das heißt sie sind nicht dafür geeignet einen dauerhaften Inselbetrieb oder Inselzustand aufrechtzuerhalten. Solche nicht permanenten Inselnetze können demnach nur eingeschränkt unabhängig vom übergeordneten Stromnetz betrieben werden, da sonst die Gefahr einer Versorgungsunterbrechung (Schwarzfall, englisch: Blackout) innerhalb des Inselnetzes besteht. Mit anderen Worten müssen nicht permanente Inselnetze typischerweise beliebig oft an ein übergeordnetes Stromnetz angekoppelt beziehungsweise abgekoppelt werden. Hierbei darf es zu keiner Versorgungsunterbrechung innerhalb des Inselnetzes kommen.

Der vorliegenden Erfindung liegt die Aufgabe zugrunde, ein Inselnetz sowie ein Verfahren zum Betrieb eines Inselnetzes bereitzustellen, dass eine verbesserte Ankopplung und Abkopplung an ein bezüglich des Inselnetzes übergeordnetes Stromnetz ermöglicht.

Die Aufgabe wird durch ein Inselnetz mit den Merkmalen des unabhängigen Patentanspruches 1 sowie durch ein Verfahren mit den Merkmalen des unabhängigen Patentanspruches 6 gelöst. In den abhängigen Patentansprüchen sind vorteilhafte Ausgestaltungen und Weiterbildungen der Erfindung angegeben.

Das erfindungsgemäße Inselnetz umfasst wenigstens eine oder mehrere Stromerzeugungseinheiten zum Erzeugen einer elektrischen Leistung, eine Regeleinheit zum Regeln jeder der mittels der Stromerzeugungseinheiten erzeugten elektrischen Leistungen, sowie einen Netzanschlusspunkt an ein bezüglich des Inselnetzes übergeordnetes Stromnetz, wobei das Inselnetz in einem vom Stromnetz entkoppelten ersten Betriebszustand und in einem an das Stromnetz mittels des Netzanschlusspunktes gekoppelten zweiten Betriebszustand betreibbar ist. Erfindungsgemäß ist die Regeleinheit dazu ausgebildet, die zur Regelung vorgesehene Regelgröße in Abhängigkeit der zwei Betriebszustände festzulegen.

Der erste Betriebszustand wird ebenfalls als Inselbetrieb bezeichnet. Der zweite Betriebszustand wird ebenfalls als Netzbetrieb bezeichnet.

Das erfindungsgemäße Inselnetz umfasst die Regeleinheit, die es ermöglicht, die Regelgröße in Abhängigkeit vom Inselbetrieb (erster Betriebszustand) und vom Netzbetrieb (zweiter Betriebszustand) festzulegen. Im Inselbetrieb ist das Inselnetz vom übergeordneten Stromnetz entkoppelt. Im Netzbetrieb ist das Inselnetz an das übergeordnete Stromnetz gekoppelt. Mit anderen Worten wird für den Inselbetrieb eine zum Netzbetrieb verschiedene Regelgröße verwendet. Im Inselbetrieb wird beispielsweise als Regelgröße eine erste physikalische Größe verwendet. Im Netzbetrieb wird beispielsweise als Regelgröße eine zweite physikalische Größe verwendet. Dadurch können vorteilhafterweise zwei verschiedene Regelarten in Bezug auf den Inselbetrieb und dem Netzbetrieb ermöglicht werden. Vorteilhafterweise wird dadurch ein Wechsel zwischen dem Inselbetrieb und dem Netzbetrieb ohne Unterbrechungen der Stromversorgung innerhalb des Inselnetzes möglich. Das ist deshalb der Fall, da im Inselbetrieb typischerweise eine Frequenzstabilität des Inselnetzes bedeutsam ist, während im Netzbetrieb die elektrischen Leistungen der Strombereitstellungseinheiten dem übergeordneten Stromnetz lediglich zur Verfügung gestellt werden. Die Netzstabilität des übergeordneten Stromnetzes wird typischerweise durch Einheiten des übergeordneten Stromnetzes sichergestellt, beispielsweise zentrale große Erzeuger wie Kraftwerke. Die vorliegende Erfindung ermöglicht es somit das Inselnetz möglichst stabil im Inselbetrieb und im Netzbetrieb zu betreiben und somit möglichst stabil vom übergeordneten Stromnetz abzukoppeln und möglichst stabil an das übergeordnete Stromnetz anzukoppeln.

Mittels der Regelgröße wird die jeweilige elektrische Leistung der Stromerzeugungseinheiten gesteuert und/oder geregelt. Mit anderen Worten weist die Regelgröße einen Sollwert und einen Istwert auf. Jede der Stromerzeugungseinheiten weist dadurch eine Sollleistung und eine Istleistung auf. Der Istwert der Regelgröße kann ein aktueller Wert der Regelgröße sein, der mittels einer Erfassungseinheit erfasst oder gemessen wird. Liegt eine Differenz zwischen dem Sollwert und dem Istwert der Regelgröße vor, so wird die elektrische Leistung wenigstens einer der Stromerzeugungseinheiten verändert oder angepasst. Dies kann solange erfolgen, bis sich die genannte Differenz betragsmäßig verkleinert oder Null ist.

Bei dem erfindungsgemäßen Verfahren zum Betrieb eines Inselnetzes mit einer oder mehreren Stromerzeugungseinheiten, einer Regeleinheit und einem Netzanschlusspunkt an ein bezüglich des Inselnetzes übergeordnetes Stromnetz, wird das Inselnetz in einem vom Stromnetz entkoppelten ersten Betriebszustand oder in einem an das Stromnetz mittels des Netzanschlusspunktes gekoppelten zweiten Betriebszustand betrieben, und es wird jede der mittels der Stromerzeugungseinheiten erzeugten elektrischen Leistungen mittels einer Regelgröße der Regeleinheit geregelt. Erfindungsgemäß wird die Regelgröße in Abhängigkeit der Betriebszustände des Inselnetzes festgelegt.

Es ergeben sich zum erfindungsgemäßen Inselnetz gleichartige Vorteile des erfindungsgemäßen Verfahrens.

Gemäß einer vorteilhaften Ausgestaltung der Erfindung ist die Regelgröße im ersten Betriebszustand die Frequenz des Inselnetzes.

Dadurch wird vorteilhafterweise die Frequenzstabilität des Inselnetzes im Inselbetrieb sichergestellt. Mit anderen Worten wird die Frequenzstabilität im Inselbetrieb durch alle Stromerzeugungseinheiten sichergestellt, ohne dass es beispielsweise einen dominanten Stromerzeuger gibt, der die Frequenzstabilität und somit die Stabilität des Inselnetzes alleine sicherstellt. Mit anderen Worten wird im Inselbetrieb die Frequenzstabilität und somit die Stabilität des Inselnetzes durch die Stromerzeugungseinheiten gemeinschaftlich sichergestellt. Hierbei können vorteilhafterweise einzelne Stromerzeugungseinheiten des Inselnetzes betrieben oder nicht betrieben werden, ohne die Frequenzstabilität zu gefährden. Die Leistung der Stromerzeugungseinheiten wird in Abhängigkeit der Frequenz, beziehungsweise in Abhängigkeit einer Differenz zwischen einer Sollfrequenz und einer Istfrequenz des Inselnetzes mittels der Regeleinheit gesteuert oder geregelt (Primärregelung). Weiterhin kann die innerhalb des Inselnetzes durch Stromverbrauchseinheiten geforderte Gesamtlast stoßfrei, das heißt ohne Beeinträchtigung der Frequenzstabilität, beliebig auf die Stromerzeugungseinheiten mittels der Regeleinheit aufgeteilt werden. Dies kann während des Inselbetriebes des Inselnetzes erfolgen. Weiterhin kann das Inselnetz vorteilhafterweise vom übergeordneten Stromnetz getrennt werden (Wechsel vom Netzbetrieb in den Inselbetrieb), ohne dass die Frequenzstabilität des Inselnetzes im Inselbetrieb beeinträchtigt wird.

In einer vorteilhaften Weiterbildung der Erfindung ist die Regelgröße im zweiten Betriebszustand eine Wirkleistung und/oder eine Blindleistung der Stromerzeugungseinheiten am Netzanschlusspunkt.

Dadurch kann das Ankoppeln und Abkoppeln des Inselnetzes vom übergeordneten Stromnetz, das heißt ein vorteilhafter Wechsel zwischen den zwei Betriebszuständen des Inselnetzes, vorteilhafterweise stoßfrei erfolgen. Die Wirkleistung und/oder Blindleistung wird dem übergeordneten Stromnetz mittels des Netzanschlusspunktes zur Verfügung gestellt.

Hierbei ist es besonderes bevorzugt als Regelgröße des Inselbetriebes die Frequenz des Inselnetzes und als Regelgröße des Netzbetriebs die Wirkleistung und/oder Blindleistung am Netzanschlusspunkte zu verwenden. Mit anderen Worten wird im Inselbetrieb eine erste Regelgröße, die Frequenz des Inselnetzes, und im Netzbetrieb eine von der ersten Regelgröße verschiedene zweite Regelgröße, die Wirkleistung und/oder Blindleistung am Netzanschlusspunkt, für die Regelung der Leistungen der Strombereitstellungseinheiten durch die Regeleinheit verwendet.

Gemäß einer vorteilhaften Ausgestaltung der Erfindung umfasst das Inselnetz wenigstens ein Blockheizkraftwerk, wenigstens einen Dieselgenerator, wenigstens eine Photovoltaikanlage, wenigstens eine Windkraftanlage und/oder wenigstens einen Energiespeicher als Stromerzeugungseinheiten.

Beispielsweise umfasst das Inselnetz eine Kombination der genannten Stromerzeugungseinheiten. Insbesondere können wechselrichterbasierte Stromerzeugungseinheiten, beispielsweise Photovoltaikanlagen und/oder Batteriespeicher, durch die Regelung mit umfasst werden. In Sinne der vorliegenden Erfindung werden Energiespeicher, insbesondere elektrochemische Energiespeicher, beispielsweise Batteriespeicher, als Stromerzeugungseinheiten angesehen.

In einer vorteilhaften Weiterbildung der Erfindung ist das Inselnetz als intelligentes Stromnetz ausgebildet, wobei eine intelligente Steuervorrichtung des intelligenten Stromnetzes die Regeleinheit umfasst.

Mit anderen Worten bildet das Inselnetz ein Smart Grid aus. Hierbei kann die Regelung bevorzugt mittels einer Echtzeitsteuerungshardware ausgeführt werden, beispielsweise PLC.

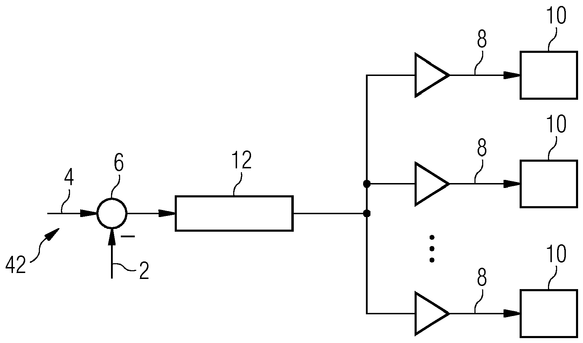

Weitere Vorteile, Merkmale und Einzelheiten der Erfindung ergeben sich aus dem im Folgenden beschriebenen Ausführungsbeispielen sowie anhand der Zeichnung. Dabei zeigt die einzige Figur eine schematisierte Regelung eines Inselnetzes gemäß einer Ausgestaltung der vorliegenden Erfindung.

Die Figur zeigt schematisch die Regelung des Inselnetzes für einen Inselbetrieb (erster Betriebszustand) und einen Netzbetrieb (zweiter Betriebszustand).

Das Inselnetz umfasst eine Regeleinheit 12 sowie eine Mehrzahl von Strombereitstellungseinheiten 10.

Wie aus der Figur zu erkennen ist, sind die Regelungen beziehungsweise ist die Regelstruktur für die zwei Betriebszustände im Wesentlichen gleich. Sie unterscheiden sich hauptsächlich in einer für die Regelung verwendeten Regelgröße 42.

Für den Inselbetrieb ist die Frequenz des Inselnetzes als Regelgröße 42 vorgesehen. Somit wird als Regelgröße 42 für den Inselbetrieb mittels der Regeleinheit 12 die Frequenz des Inselnetzes festgelegt beziehungsweise verwendet. Für den Netzbetrieb wird als Regelgröße 42 eine Wirkleistung und/oder Blindleistung an einem Netzanschlusspunkt des Inselnetzes zur Regelung mittels der Regeleinheit 12 verwendet beziehungsweise festgelegt.

Die Regelgröße 42 weist jeweils einen Sollwert 4 und einen Istwert 2 auf. Aufgrund der Differenz 6 zwischen dem Sollwert 4 und dem Istwert, die bei der Regelung mittels der Regeleinheit 12 verwendet wird, erfolgt die Regelung der elektrischen Leistungen der Strombereitstellungseinheiten 10. Hierzu gibt die Regeleinheit 12 in Abhängigkeit der genannten Differenz zwischen dem Sollwert 4 und dem Istwert 2 jeder Strombereitstellungeinheiten 10 eine Sollleistung 8 vor. In der Figur wird somit eine Gesamtleistung auf die einzelnen Strombereitstellungseinheiten 10 mittels der Regeleinheit 12 aufgeteilt. Diese Aufteilung ist symbolisch durch die Verzweigung und die Dreiecke dargestellt. Die Aufteilung kann mittels einer Funktion erfolgen, die im Englischen als Load Sharing bezeichnet wird.

Somit unterscheidet sich das Grundschema der Regelung des Inselnetzes für einen Inselbetrieb und einen Netzbetrieb nicht. Erfindungsgemäß wird jedoch die zur Regelung verwendete Regelgröße 42 an die zwei Betriebszustände angepasst. Mit anderen Worten wechselt mit einem Wechsel der Betriebszustände ebenfalls die Regelgröße 42. Dadurch wird vorteilhafterweise ein stoßfreier und ausfallfreier Wechsel des Inselnetzes zwischen den zwei Betriebszuständen ermöglicht.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 2: Istwert
- 4: Sollwert
- 6: Differenz
- 8: Sollleistung
- 10: Stromerzeugungseinheit
- 12: Regeleinheit
- 42: Regelgröße

## Patentansprüche

1. Inselnetz, umfassend wenigstens eine oder mehrere Stromerzeugungseinheiten (10) zum Erzeugen einer elektrischen Leistung, eine Regeleinheit (12) zum Regeln jeder der mittels der Stromerzeugungseinheiten (10) erzeugten elektrischen Leistungen, sowie einen Netzanschlusspunkt an ein bezüglich des Inselnetzes übergeordnetes Stromnetz, wobei das Inselnetz in einem vom Stromnetz entkoppelten ersten Betriebszustand und in einem an das Stromnetz mittels des Netzanschlusspunktes gekoppelten zweiten Betriebszustand betreibbar ist, **dadurch gekennzeichnet, dass** die Regeleinheit (12) dazu ausgebildet ist, die zur Regelung vorgesehene Regelgröße (42) in Abhängigkeit der zwei Betriebszustände festzulegen.

2. Inselnetz gemäß Anspruch 1, **dadurch gekennzeichnet, dass** die Regelgröße (42) im ersten Betriebszustand die Frequenz des Inselnetzes ist.

3. Inselnetz gemäß Anspruch 1 oder 2, **dadurch gekennzeichnet, dass** die Regelgröße (42) im zweiten Betriebszustand eine Wirkleistung und/oder eine Blindleistung der Stromerzeugungseinheiten am Netzanschlusspunkt ist.

4. Inselnetz gemäß einem der vorhergehenden Ansprüche, **dadurch gekennzeichnet, dass** das Inselnetz wenigstens ein Blockheizkraftwerk, wenigstens einen Dieselgenerator, wenigstens eine Photovoltaikanlage, wenigstens eine Windkraftanlage und/oder wenigstens einen Energiespeicher als Stromerzeugungseinheiten umfasst.

5. Inselnetz gemäß einem der vorhergehenden Ansprüche, **dadurch gekennzeichnet, dass** das Inselnetz als intelligentes Stromnetz ausgebildet ist, wobei eine intelligente Steuervorrichtung des intelligenten Stromnetzes die Regeleinheit umfasst.

6. Verfahren zum Betrieb eines Inselnetzes mit einer oder mehreren Stromerzeugungseinheiten (10), einer Regeleinheit (12) und einem Netzanschlusspunkt an ein bezüglich des Inselnetzes übergeordnetes Stromnetz, bei dem das Inselnetz in einem vom Stromnetz entkoppelten ersten Betriebszustand oder in einem an das Stromnetz mittels des Netzanschlusspunktes gekoppelten zweiten Betriebszustand betrieben wird, und bei dem jede der mittels der Stromerzeugungseinheiten (10) erzeugten elektrischen Leistungen mittels einer Regelgröße (42) der Regeleinheit (12) geregelt wird, **dadurch gekennzeichnet, dass** die Regelgröße (42) in Abhängigkeit der Betriebszustände des Inselnetzes festgelegt wird.

7. Verfahren gemäß Anspruch 6, **dadurch gekennzeichnet, dass** als Regelgröße (42) für den ersten Betriebszustand die Frequenz des Inselnetzes festgelegt wird.

8. Verfahren gemäß Anspruch 6 oder 7, **dadurch gekennzeichnet, dass** als Regelgröße (42) für den zweiten Betriebszustand eine Wirkleistung und/oder eine Blindleistung der Stromerzeugungseinheiten am Netzanschlusspunkt festgelegt wird.

9. Verfahren gemäß einem der Ansprüche 6 bis 8, **dadurch gekennzeichnet, dass** das Inselnetz zwischen dem ersten und zweiten Betriebszustand wechselt.
